# EUROPEAN PATENT APPLICATION

(11) **EP 1 146 436 A2**
(43) Date of publication of application: **17.10.2001**
(21) Application number: 01301732.2
(22) Date of filing: 26.02.2001
(51) Int. Cl.: G06F 17/21

(54) **Template animation and debugging tool**

(30) Priority: 13.04.2000 GB 0009013
(71) Applicant: International Computers Limited, London, EC2A 1SL (GB)
(72) Inventor: Duxbury, Paul, Sandbach, Cheshire CW11 1RN (GB)
(74) Representative: Guyatt, Derek Charles

(57) **Abstract**

An animation tool is used for debugging electronic templates (e.g. for a Web page) containing embedded commands. The tool renders the template, up to a specified step number, to produce a partial output. The partial output includes items subsequent to the specified step number (e.g. HTML end tags), to ensure that the partial output is well-formed. The tool parses the template to generate a parse tree having a branch at each tag for which there is a corresponding end tag. It then truncates the parse tree to remove parts subsequent to the specified step number, and forms the partial output from the truncated parse tree.

## Description

### Background to the Invention

This invention relates to animating and debugging electronic templates. The invention is particularly concerned with templates for generating text format documents, especially HTML (Hypertext Markup Language) documents.

As more and more websites start to contain functionality as well as static information, in some cases fronting major enterprise applications, it is becoming common to generate web pages independently for each user, dynamically on request. This is necessary so that results of queries or calculations can be inserted into the pages, and so that personalisation can be effected.

Traditionally this meant that building web pages became a development programming task. "CGI" programs were written to perform application functions and to output HTML responses. But this meant that programmers were also responsible for the look and feel of the site, normally the province of graphic designers. Also the simplest change to site design had to go back to the development programmers who created it.

To help this situation, some form of template-based rendering system is now often used. Here, a graphic designer generates HTML for the look and feel of a site, but leaves "holes" into which dynamic information can be placed. This is known as a *template.* When required, the template is rendered, by inserting the dynamic information into the holes, to generate pure HTML.

The main advantages of template-based rendering are:
- It separates programming and graphic design aspects, and hence the skills needed.
- It allows standard layouts, navigation, and house-styles to be easily imposed.
- It makes changes to look and feel easier, since only the templates need altering.
- It allows alternative renderings for different devices, by supplying multiple templates for the same content.
- In some cases, it allows automatic construction of hyperlinks.

A template may consist of a document (typically in a text format such as HTML) containing embedded command tags that identify what information is to be inserted into the template when it is rendered.

When such a template is being developed, it would be useful to be able to step through the template up to any specified command tag, and to display the partial result, i.e. the effect of rendering the template up to that command. This would provide a useful tool for debugging the template. For example, it could be used to "animate" the template, showing the effect of stepping through a sequence of commands.

The object of the present invention is therefore to provide a way of partially rendering a template.

### Summary of the Invention

According to the invention a method for partially rendering an electronic template containing a plurality of tags, at least some of which have corresponding end tags, comprises:
(a) rendering the template, up to a specified tag, to produce a partial output;
(b) restoring in the partial output any end tags subsequent to the specified tag that are necessary to ensure that the partial output is well-formed; and
(c) displaying the partial output.

### Brief Description of the Drawings

Figure 1 shows a computer system embodying the invention.
Figure 2 shows the logical organisation of a content store.
Figure 3 shows the user interface of a template animator tool.
Figure 4 shows a parse tree structure generated by the template animator tool.

### Description of an Embodiment of the Invention

One embodiment of the invention will now be described by way of example with reference to the accompanying drawings.

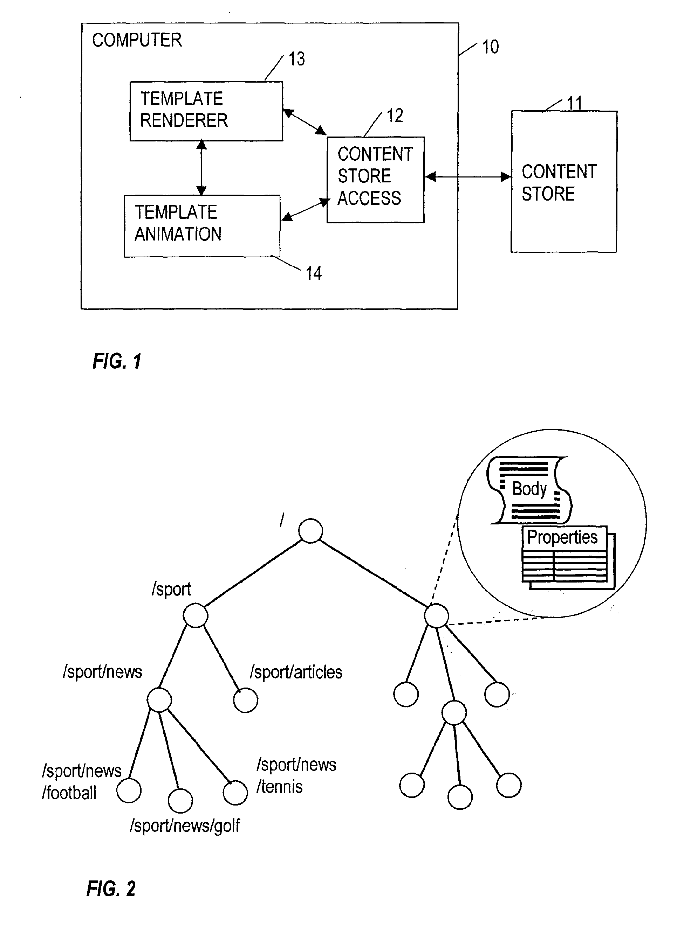

Figure 1 shows a computer 10, which in this example is assumed to be used for developing new websites. A content store 11, holds the content for the websites. The computer can access the content store by way of a content store access service 12. The computer also includes a template renderer 13 and a template animation/debugging tool 14. The components 12-14 may be implemented as Java servlets.

### Content store

The content store 11 holds all the content for the websites, including templates and partial results. It contains a set of objects, logically organised in a tree structure. Each object represents either an actual item of content (such as a template, dynamic information to be inserted into a template, or a rendered document), or a folder which may contain other objects. The content store may be distributed, and accessed over a network using the standard WebDAV (Web-based Distributed Authoring and Versioning) protocol, or alternatively may be local.

Each object in the content store has a hierarchic address, which identifies its position in the tree structure. For example, Figure 2 shows a portion of the content store, with objects identified by addresses such as "/sport/news/football". The root of the tree is indicated by "/".

Each object in the content store has an internal structure, comprising a content body, and a number of properties. The properties may be further organised into one or more property sheets, so that name clashes between standard properties and those assigned by different groups of individuals are avoided. Property sheets provide a convenient visualisation of the concept of XML namespaces as used in WebDAV.

The properties of an object can be addressed by appending a suffix of the form :*propertysheet*:*property* to the object address. For example,
/news/speeches/s1234:PUBLIC:speaker
addresses the *speaker* property on the PUBLIC property sheet of the object at /news/speeches/s1234. If the property sheet is not specified, the PUBLIC property sheet is assumed by default.

An object can model any of the following items:
- A simple file, where all the content is in the body, and is treated as just an unstructured row of bytes or text characters. There may be some fixed properties, such as content length and modification date, corresponding to those of an ordinary file.
- A document together with its metadata, i.e. information about the document such as its author, approval status, subject matter, default publishing template and so on.
- A fielded database record, where all the data is held in the properties, here having the role of database fields.
- Combinations of the above, e.g. a fielded database record with associated metadata.

### Templates

A template consists of a document (typically HTML) containing embedded command tags that identify what information is to be inserted into the template when it is rendered. These commands include WebDAV and other commands, embedded in the document using XML syntax. These embedded command tags are distinguished from conventional HTML tags by a "ds:" namespace.

Templates may reside in file store, or may be held in the content store itself. Some examples of typical embedded commands that can be used in templates will now be described.

### insert command

The *insert* command retrieves or constructs some text, and then inserts it into an output stream. One possible format for the *insert* command is:
<ds:insert content="*SourceAddress" />*
The *SourceAddress* attribute specifies the content store address of an object or property whose contents are to be retrieved and inserted into the output stream.

For example, the command:
<ds:insert content="/sport/news/000216" />
retrieves the news article at address "/sport/news/000216" from the content store, and inserts it into the output stream.

Content properties can also be directly addressed, using the suffix notation mentioned above. For example:
<ds:insert content="/sport/news/000216:headline" />
inserts the headline property associated with the news article.

The *content* attribute may be replaced by a *src* (source) attribute. This indicates a URL (Universal Resource Locator) which can be used to access an object from an external website.

### for command

The *for* command is used to specify an iterative loop through a set of objects or values, repeating some processing for each. One possible format for this command is:
<ds:for content="*RootObject*" filter="*Filter*" >
*Loop Body*
</ds:for>

This command causes the enclosed *Loop Body* text to be repeated a number of times, once for each object in the *RootObject* folder. The *Filter* attribute is an expression involving comparison operators, which specifies a condition for selecting objects from this set. For example, the filter expression:
subject EQ football OR subject EQ golf
selects objects whose *subject* property is equal to either "football" or "golf".

For example, the construction:
<ds:for content="/sport/news" filter="this:subject EQ ' football'">
···
</ds:for> loops through all the articles in folder /sport/news, selecting only those whose *subject* property is equal to "football". This may be used, for example, to build an index page of news items relating to football.

A number of other "programming" commands (loops, conditions, procedures, variables etc.) are also provided, which may be used to produce very sophisticated and adaptive web pages.

### Template renderer

A call to the template renderer 13 specifies the address in the content store of the template to be rendered. When called, the template renderer accesses the content store to get the specified template. It then parses the template, to identify any embedded commands in it. Each command is executed, and any text generated by the command is appended to an output string. Any parts of the template that are not embedded commands are simply copied to the output string. The resulting output string is passed back to the caller.

### Template animation tool

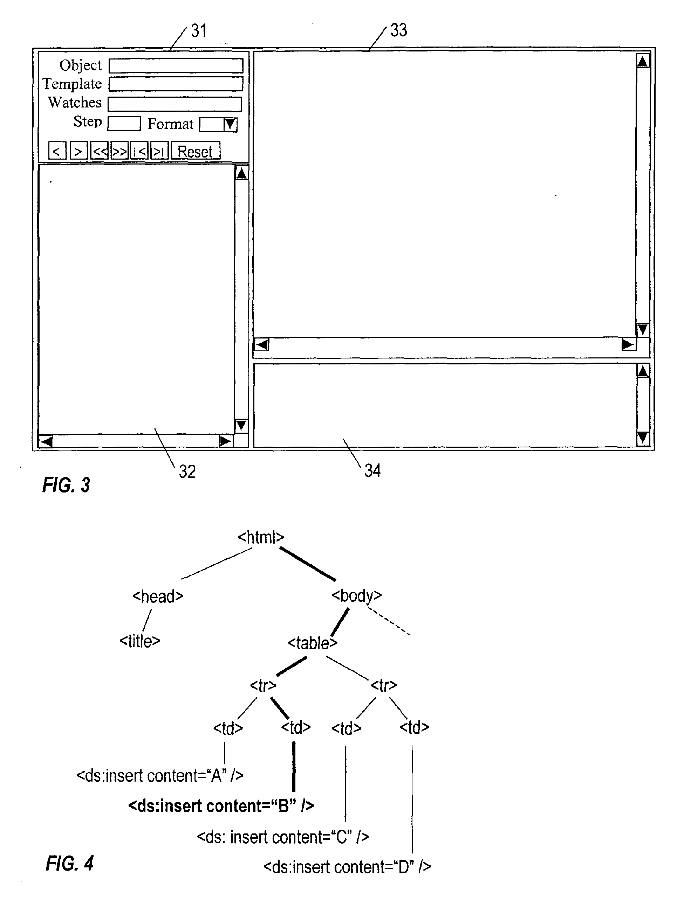

The template animation tool 14 is web-based, using a conventional browser such as Microsoft Internet Explorer Version 4 to provide its user interface. As shown schematically in Figure 3, the user interface has four windows: control window 31, template window 32, view window 33 and watch window 34.

The control window 31 allows an object/template combination to be specified, or alternatively these may be preset according to the context when the animator is entered, e.g. by a button on a particular web page or administration screen. A toolbar with "VCR" type controls is also provided, for allowing the user to move to a particular step number within the template. These controls include buttons to allow single step (i.e. move forward to the next command), or "fast forward" (i.e. multiple steps, say five at a time). It is also possible to jump to the beginning or end. The resulting step number is displayed in a box. Alternatively, a step number can be entered explicitly in the box.

The template window 32 displays a portion of the template currently being rendered. All the embedded commands are highlighted, and the command which is about to execute is highlighted in a different colour, font or style, or any other suitable method of distinction. Clicking on any of the embedded commands in this window causes a pop-up help window to be displayed for that command.

The view window 33 displays the result of rendering the template, up to the selected step number. As will be described, rather than simply truncating the template at the current command, the underlying HTML is adjusted to make it well-formed, i.e. to include end tags. This avoids most problems which might arise from passing incomplete HTML sequences to the browser. Through the control window, an option is available to view the rendered HTML text instead of the resulting page image.

The output view contains small hyperlinks known as "locators"; in this embodiment they are represented by small coloured circles containing the letter "L", although it will be appreciated that any other suitable form may be used. There is one such locator for each embedded command instance in the template, and each indicates the location of the output that was generated by the corresponding command instance. The locator's tool tip shows the command instance and the step number. Clicking on a locator will automatically "rewind" the rendering process and step to the selected command. This is useful for quickly finding the command which generated a particular (possibly erroneous) item of output.

Because it is not possible to put a link within another link, the locators for any commands occurring within links have to be queued until the link in which it is embedded closes. The same is true for marking template expressions that occur within the attributes of HTML tags, and doubly true if the tag happens to be a link.

The watch window 34 displays the current values of selected local variables. A default set of variable names can be configured, and others can be entered into the Control Window. This feature is useful for debugging more complex scripts.

As described above, the animation tool enables a particular step number to be specified, by way of the control window, or through the locators. When a step number has been specified in either of these ways, the template renderer is called to render the template, starting from the beginning of the template, up to the specified step number. It should be noted that the rendering always restarts from the beginning of the template, even if the "step backwards" or "fast back" button is selected, although the operation will normally be so fast that the user will perceive it as stepping backwards.

The template rendering process will now be described in more detail.

First, the template renderer parses the template, including both HTML tags and embedded command tags, and constructs a parse tree, which branches at each tag in the template that has a corresponding end tag: i.e. HTML tags such as <table> and <tr>, and also embedded command tags such as the <ds:for ... > command described above. For example, consider the following simple HTML file:

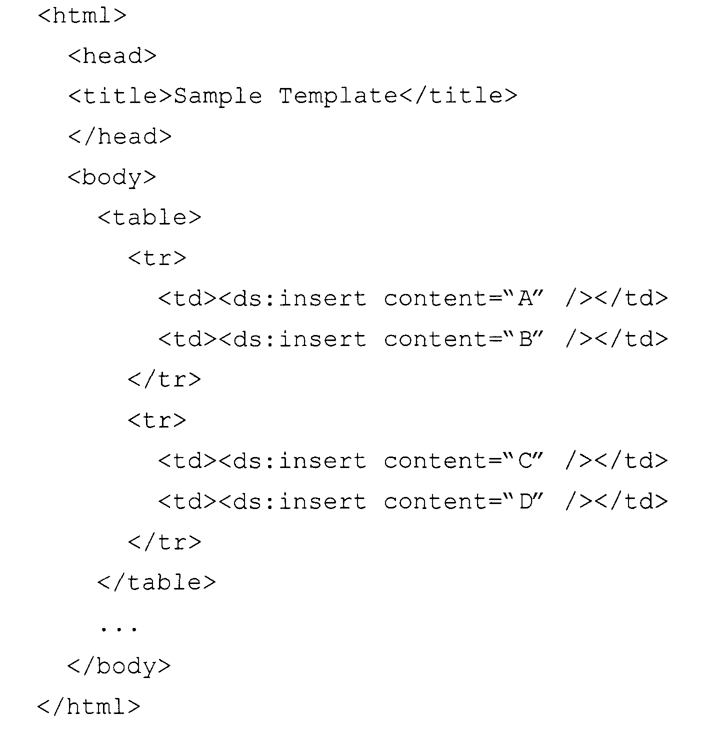

It can be seen that this HTML will generate a 2 X 2 table. The data items in the table are retrieved from the content store locations A to D and inserted into the output document as specified by the <ds:insert ... /> commands.

Figure 4 shows the parse tree generated as a result of parsing this file. It can be seen that this tree does not contain any HTML end tags; rather, they are implied from the tree structure.

Next, the template renderer expands the embedded commands, e.g. by replacing the <ds:insert> commands with the appropriate data items from the content store. If the embedded commands contain a loop (for example, using the <ds:for> command described above), the loop is iterated as required.

The renderer keeps track of the number of expansion steps it has performed, and stops when the specified step number is reached, even if this is part way through a loop. (Each iteration around a loop counts as a step). When the required step number is reached, the renderer truncates the remainder of the tree by removing everything later than the last command to be expanded, i.e. everything to the right of the path between the root and this command. For example, referring to Figure 4, if the last command to be expanded was the one shown in bold, then everything to the right of the path shown in bold lines in will be truncated.

The template renderer then serialises the truncated parse tree, so as produce expanded HTML representing the partial result of rendering the template up to the specified step. In this example, the expanded HTML will be as follows:

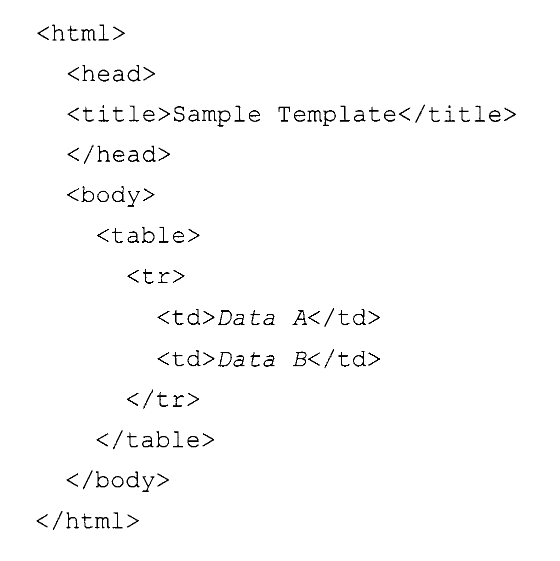

It can be seen that this expanded HTML has all the required end tags (such as </table>) and hence is well-formed HTML.

Finally, the expanded HTML is executed and the partial result is displayed in the view window. In this example, only the first row of the table will be displayed. Alternatively, if the option to view the rendered HTML text was selected in the control window, the expanded HTML itself is displayed in the view window.

It will be appreciated that many modifications may be made to the system described above without departing from the scope of the present invention as defined by the claims. For example, the invention may be used with templates employing markup languages other than HTML, and with different embedded command languages.

## Claims

1. A method for partially rendering an electronic template containing a plurality of tags, at least some of which have corresponding end tags, the method comprising:
(a) rendering the template, up to a specified tag, to produce a partial output;
(b) restoring in the partial output any end tags subsequent to the specified tag that are necessary to ensure that the partial output is well-formed; and
(c) displaying the partial output.

2. A method according to Claim 1, including:
(a) parsing the template to generate an alternative representation of the template in which end tags are implicit;
(b) truncating said alternative representation by removing parts subsequent to the specified tag; and
(c) using said alternative representation to generate said partial output, including the end tags necessary to ensure that the partial output is well-formed.

3. A method according to Claim 1, including:
(a) parsing the template to generate a parse tree having a branch at each tag for which there is a corresponding end tag;
(b) truncating the parse tree to remove parts subsequent to the specified tag; and
(c) using the truncated parse tree to generate said partial output, including the end tags necessary to ensure that the partial output is well-formed.

4. A method according to any preceding claim wherein the template is an HTML document, including HTML tags.

5. A method according to any preceding claim wherein the template includes embedded command tags, identifying information to be inserted into the template when it is rendered.

6. A method according to Claim 5, including keeping a count of the number of embedded command tags that have been executed during rendering, and terminating the rendering when said count reaches a predetermined value.

7. A method according to Claim 6, wherein the embedded command tags include loop commands defining at least one loop, and wherein said count is incremented each time the loop is executed.

8. A method according to any preceding claim including inserting locator markers in the display of the partial output, each locator marker indicating the location of material that was generated from a particular command tag.

9. A method according to Claim 8 wherein selecting one of the locator markers automatically rewinds the display to the command tag corresponding to that marker.

10. A method according to Claim 8 or 9 wherein any locator marker corresponding to a command tag embedded within a link is queued until the link in which it is embedded closes.

11. A computer system comprising:
(a) a content store, holding an electronic template containing a plurality of tags, at least some of which have corresponding end tags;
(b) means for rendering the template, up to a specified tag, to produce a partial output;
(c) means for restoring in the partial output any end tags subsequent to the specified tag that are necessary to ensure that the partial output is well-formed; and
(d) means for displaying the partial output.

12. A computer program product comprising a data carrier including a computer program for performing a method for partially rendering an electronic template containing a plurality of tags, at least some of which have corresponding end tags, the method comprising:
(a) rendering the template, up to a specified tag, to produce a partial output;
(b) restoring in the partial output any end tags subsequent to the specified tag that are necessary to ensure that the partial output is well-formed; and
(c) displaying the partial output.
